# EUROPÄISCHE PATENTSCHRIFT

(11) **EP 1 240 533 B1**
(45) Veröffentlichungstag und Bekanntmachung des Hinweises auf die Patenterteilung: **08.06.2005**
(21) Anmeldenummer: 00987334.0
(22) Anmeldetag: 01.12.2000
(51) Int. Cl.: G01S 5/16, G01S 17/87

(54) **VERFAHREN ZUR OPTISCHEN ÜBERWACHUNG DER UMGEBUNG EINES SICH BEWEGENDEN FAHRZEUGS**
METHOD FOR OPTICALLY MONITORING THE ENVIRONMENT OF A MOVING VEHICLE
PROCEDE POUR LA SURVEILLANCE OPTIQUE DE L'ENVIRONNEMENT D'UN VEHICULE AUTOMOBILE EN MOUVEMENT

(30) Priorität: 23.12.1999 DE 19962491
(43) Veröffentlichungstag der Anmeldung: 18.09.2002
(73) Patentinhaber: Conti Temic microelectronic GmbH, 90411 Nürnberg (DE)
(72) Erfinder: LARICE, Markus, 85123 Karlskron (DE); STEINER, Werner, 86529 Schrobenhausen (DE)
(86) Internationale Anmeldenummer: PCT/EP2000/012087
(87) Internationale Veröffentlichungsnummer: WO 2001/048508

(56) Entgegenhaltungen:
- EP-A- 0 363 339
- EP-A- 0 697 641
- DE-C- 4 026 649
- GB-A- 2 105 545
- US-A- 5 974 348

## Beschreibung

Die Erfindung betrifft ein Verfahren zur Überschlagserkennung und Auslösung insassenschützender Mittel in Fahrzeugen.

Verfahren zur Überschlagserkennung und Auslösung insassenschützender Mittel in Fahrzeugen sind grundsätzlich bekannt und arbeiten mit einem Drehratensensor, welcher auf eine Drehbeschleunigung durch mechanische Auslenkung beweglicher Massekörper reagiert.

Darüber hinaus sind Verfahren zur optischen Überwachung der Umgebung eines sich bewegenden Fahrzeugs bereits aus einer Vielzahl von Anwendungen bekannt. Als Umgebung des Fahrzeugs wird dabei der direkt in Fahrtrichtung liegende Fahrbahnbereich sowie dazu benachbarte seitliche Bereiche erfasst. So beschreiben beispielsweise die DE 21 56 001, DE 30 01 621 und die DE 197 24 496 A1 eine Hindemiserfassung auf Basis eines solchen Verfahrens, die DE 198 04 944 A1 bspw. eine Abstandsregelung in Abhängigkeit von vorausfahrenden Fahrzeugen. Die DE 34 15 572 A1 beschreibt die Anpassung des Meßwinkels einer solchen Überwachungseinrichtung in Abhängigkeit vom Lenkwinkel des Fahrzeugs und die US 3,749,197 eine Anpassung des Neigungswinkels der Messstrahlen zur Fahrbahn hin in Abhängigkeit von der Geschwindigkeit des Fahrzeugs.

Die DE 37 32 347 C1 und die WO 99/34235 beschreiben Verfahren zur Aufnahme dreidimensionaler Abstandsbilder, bei denen einem Bildpunkt jeweils auch eine Abstandsinformation zugeordnet wird. Während die Anwendung im Bereich der Innenraumüberwachung eines Fahrzeuges jedoch ein stehendes Bezugssystem aufweist, erfordert die Umgebungsüberwachung aus einem sich bewegenden Fahrzeug eine entsprechende Berücksichtigung der Eigenbewegung.

Aus der DE 37 41 259 A1 ist ein Verfahren sowie eine Vorrichtung zur autonomen Steuerung eines Fahrzeuges zu entnehmen, bei dem während der Fahrt kontinuierlich die Lageveränderung der Umgebung relativ zum Fahrzeug vermessen wird. Neben der Entfemung eines Objektes der Umgebung wird auch dessen Winkel parallel zur Fahrbahnebene erfaßt. Eine Winkelmessung in der Ebene ist auch aus der DE 37 03 904 A1 bei stehenden Objekten bekannt.

Darüber hinaus ist aus der DE 196 50 629 C2 ein Verfahren zum Messen der Neigung eines Fahrzeugs bekannt, welches an den Ecken des Fahrzeugs vom Fahrzeug aus senkrecht nach unten auf die Fahrbahn gerichtete optische Abstandssensoren aufweist und aus der Veränderung dieser Abstände der Neigungswinkel errechnet wird. Entsprechend diesem Neigungswinkel werden Überrollbügel oder andere insassenschützende Mittel, bspw. Gurtstraffer und Airbags aktiviert. Die optische Abstandsmessung senkrecht zum Boden hin kann jedoch aufgrund von Fahrbahnunebenheiten zu erheblichen Störungen führen.

US-A- 5 974 348 beschreibt ein Verfahren, bei dem der Neigungswinkel aus der zeitlichen Veränderung der Lage von Punkten der Umgebung eines Fahrzeugs bestimmt wird.

Es werden zur Neigungswinkelmessung auch drehbeschleunigungssensitive Sensoren (Gyro-Sensoren) eingesetzt, die jedoch recht teuer sind und in Grenzfällen auch zu Fehlentscheidungen führen.

Aufgabe der Erfindung ist eine Möglichkeit zur Verbesserung der Überschlagserkennung vorzustellen. Diese Aufgabe wird durch die Merkmale des Anspruchs 1 gelöst.

So wird ein Verfahren zur Überschlagserkennung und Auslösung insassenschützender Mittel in Fahrzeugen auf Basis einer optischen Überwachung der Umgebung eines sich bewegenden Fahrzeugs durch Erfassung einer Anzahl von Punkten in dieser Umgebung vorgeschlagen, bei dem aus der zeitlichen Veränderung der Lage der Umgebungspunkte der Neigungswinkel des Fahrzeuges gegenüber der Fahrbahn abgeleitet wird. Besonders bevorzugt ist dabei die Verwendung einer bereits zur Hindemiserkennung vorgesehenen optischen Einrichtung zur Überwachung der Umgebung, bei der ergänzend aus der zeitlichen Veränderung der Lage der erfaßten Punkte auch der Neigungswinkel des Fahrzeugs bestimmt wird. Dadurch kann im Vergleich zu separat für diese Neigungsmessung vorgesehenen Sensoren eine erhebliche Kosteneinsparung erreicht werden. Zudem ermöglicht eine Erfassung der Fahrzeugumgebung, also insbesondere der in Fahrtrichtung liegenden Bereiche der Fahrbahn die Verwendung einer Vielzahl von Umgebungspunkten und eine Korrelation der für den jeweiligen Umgebungspunkt gemessenen Werte, insbesondere die Eliminierung einzelner Störungen, wie Fahrbahnunebenheiten ect.

Vorzugsweise wird dabei die zeitliche Veränderung der Lage des natürlichen Horizonts erfaßt wird und die auf der Linearbewegung des Fahrzeuges beruhenden Änderungen eliminiert.

Sofem die Umgebungsüberwachung einen Erfassungswinkel aufweist, erweist es sich als bevorzugt, die Umgebungsüberwachung um die senkrecht zur Fahrbahn stehende Fahrzeugachse verdrehbar ist, so daß die Erfassungsrichtung an die Umgebungsbedingungen oder das Fahrzeugverhalten anpaßbar ist.

Der so aus den erfaßten Umgebungspunkten abgeleitete Neigungswinkel wird für die Plausibilitätsprüfung eines Drehratensensors zur Überschlagserkennung verwendet. Der Drehratensensor weist einen beweglichen, auf eine Drehbeschleunigung durch mechanische Auslenkung reagierenden Massekörper auf. Bei extrem langsamer Veränderung des Neigungswinkels kann das Signal eines solchen Sensors starke Abweichungen vom realen Neigungswinkel aufweisen. Auch sonst kann der optisch erkannte Neigungswinkel genutzt werden, um zu prüfen, ob der vom Drehratensensor ermittelte Neigungswinkel plausibel ist. Die Anforderungen an die Genauigkeit der optischen Neigungswinkelmessung aus den Umgebungspunkten können dabei deutlich reduziert werden.

Nur bei Übereinstimmung werden insassenschützende Mittel, wie Überrollbügel, Gurtstrammer oder Airbags ausgelöst

Die Erfindung soll nachfolgend anhand von Ausführungsbeispielen und Figuren näher erläutert werden. Kurze Beschreibung der Figuren:
- Figur 1: Fahrzeug, Umgebung und erfaßtes Umgebungsbild ohne Neigung des Fahrzeugs

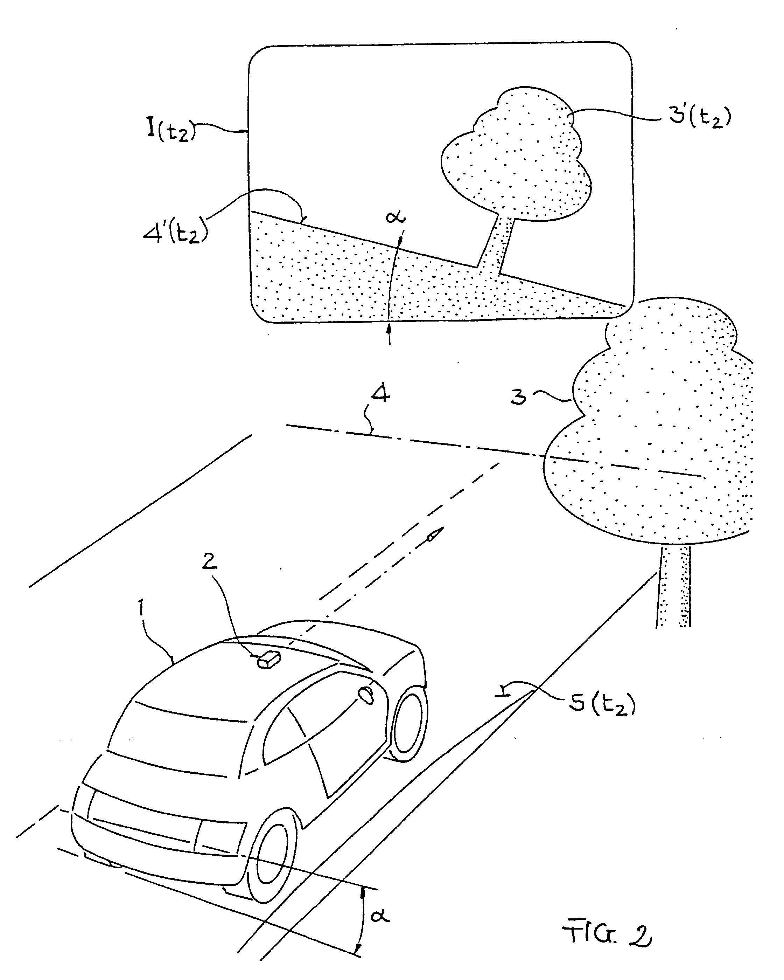

- Figur 2: Fahrzeug, Umgebung und erfaßtes Umgebungsbild bei Neigung des Fahrzeugs aufgrund einer Fahrt einseitig auf eine Rampe
- Figur 3: Ausgestaltung mit Überwachung der Entfernung von Punkten auf der Fahrbahn in einem vorgegebenen Winkel zur Fahrtrichtung
- Figur 4: Fahrzeug im geneigten Zustand in einer Ausgestaltung gemäß Figur 3

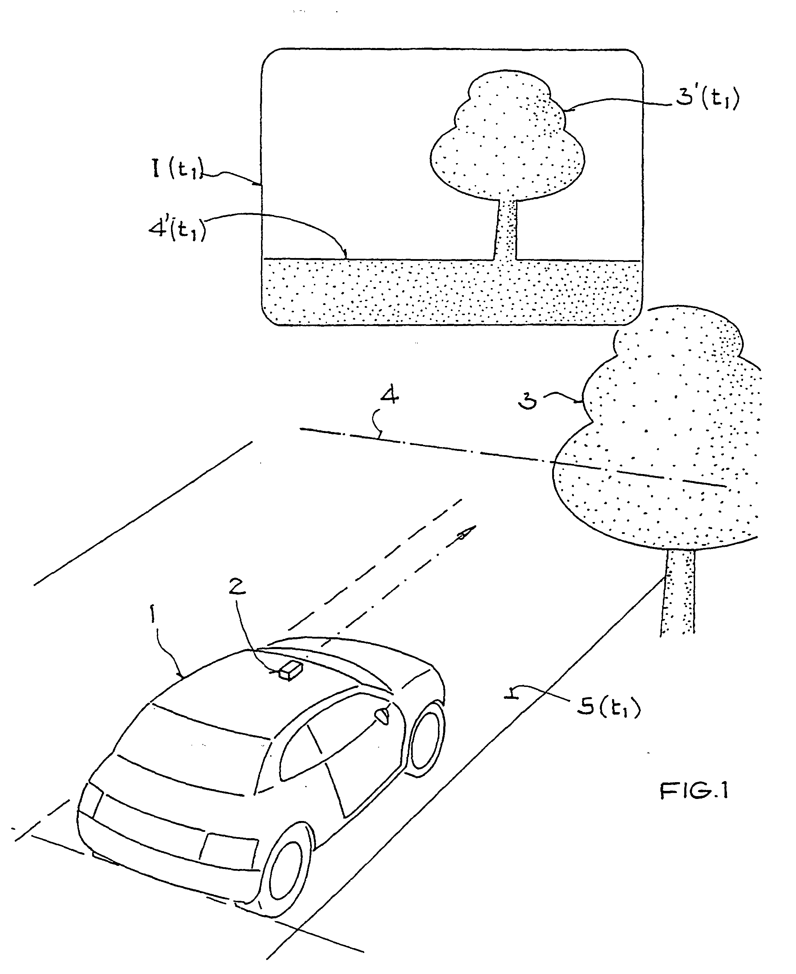

Die Figur 1 zeigt zu einem Zeitpunkt t(1) ein sich bewegendes Fahrzeug auf einer ebenen Fahrbahn 5(t1), wobei eine optische Einheit 2 zur Überwachung der Umgebung eine Anzahl von Punkten in dieser Umgebung erfaßt, insbesondere markante Objekte 3 und die natürliche Horizontlinie 4. Ein mögliches von der Einheit 5 erfaßtes Umgebungsabbild I(t1) ist ebenfalls gezeigt. Die optische Einheit 2 kann dabei innerhalb des Fahrzeugs hinter der Windschutzscheibe oder auf dem Dach oder im Frontbereich, bspw. in den Scheinwerfern, angeordnet sein und ist insbesondere bereits zur Hindemiserkennung bzw. Abstandsregelung zu vorausfahrenden Fahrzeugen vorgesehen. Insbesondere können so von einer optischen Kamera die Bilddaten der Umgebung des Fahrzeugs insbesondere in Fahrtrichtung ausgenommen werden und entsprechend verschiedenen Auswertealgorithmen zugeführt werden, die aus den Bilddaten entsprechend neben Abstandswerten auch den Neigungswinkel ableiten.

Überfährt das Fahrzeug 1 nachfolgend in t2 beispielsweise eine Rampe 5(t2) ergibt sich ein Neigungswinkel α des Fahrzeugs 1 gegenüber einer ebenen Fahrbahn. Das von der optische Einheit 2 gewonnene Umgebungsabbild I(t2) weist neben einer auf der Linearbewegung des Fahrtrichtung des Fahrzeuges beruhenden Änderung eine zum Neigungswinkel α proportionale Veränderung der Lage der Umgebungspunkte auf, so daß anhand dieser der Abbilder der markanten Objekte 3'(t2) und der natürliche Horizontlinie 4'(t2) im Vergleich zu den Abbildem 3'(t1), 4'(t1) zu t1 der Neigungswinkel α errechnet werden kann. Bilderkennungssoftware kann die Ermittlung des Neigungswinkels α aus der zeitlichen Veränderung der Lage der Umgebungspunkte noch verfeinem. In die Bild- bzw. Objekterkennung können dann auch Fahrzeugparameter, insbesondere die Geschwindigkeit einbezogen werden, insbesondere um die Änderungen aufgrund der Bewegung des Fahrzeugs in Fahrtrichtung zu eliminieren. Dies ist grundsätzlich jedoch auch aus mehreren beabstandeten Bildpunkten mit einander gleicher Veränderung der Lage möglich.

Das Fahrzeug weist auch einen Drehratensensor auf, dessen Neigungswinkelsignalmit dem optisch bestimmten Neigungswinkel verglichen und nur bei Übereinstimmung beider Neigungswinkel als plausibel erkannt und bei Überschreitung vorgegebener Grenzwerte insassenschützende Mittel, bspw. Überrollbügel oder Airbags aktiviert werden.

Eine zur Fahrzeugachse verdrehbare optische Einheit mit einem entsprechend ausrichtbaren Erfassungswinkel ermöglicht die seitliche Fahrzeugumgebung zur Auswertung hinzuziehen. Dies kann vorzugsweise in bestimmten Fahrzeugsituationen erfolgen, bspw. bei einem Schleudervorgang. Auch wäre eines Rückkopplung an ESP denkbar, so daß Hindemisse umfahren werden könnten.

Als Unterbringungsort für die optische Einheit bieten sich neben der Anordnung im Front- oder Dachbereich auch in den Außenspiegeln, im Türgriff oder Blinker an.

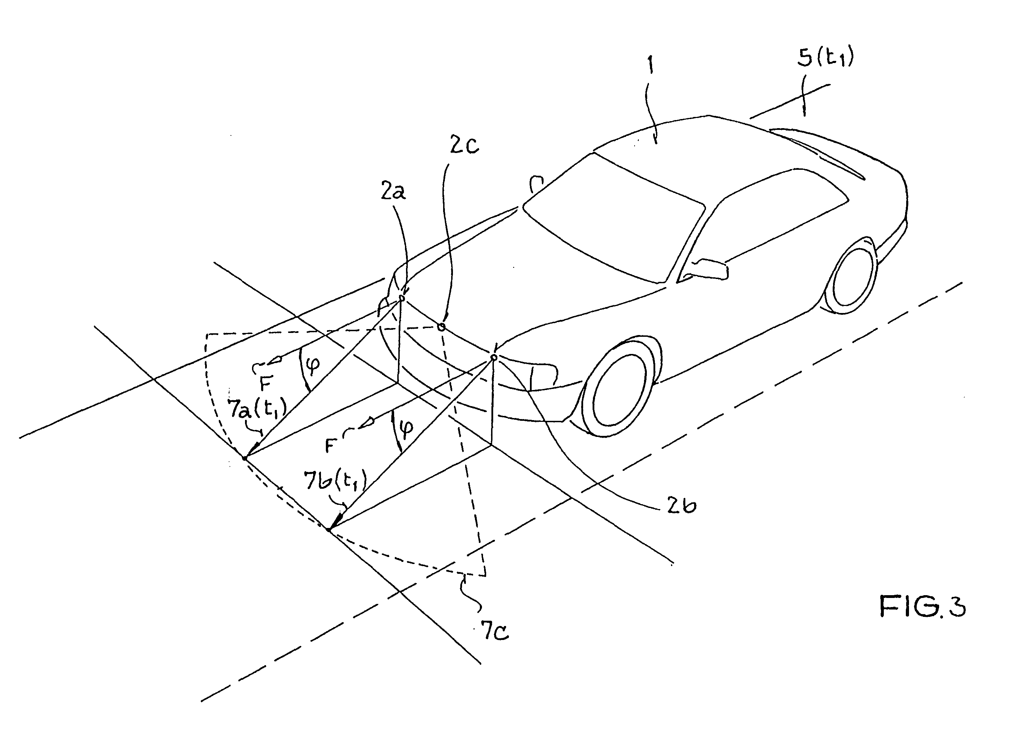

Die Figur 3 illustriert noch eine weitere Ausgestaltung des Verfahrens, bei dem der Abstand 7a,7b,7c zwischen der Überwachungseinrichtung 2a,2b,2c und mehreren Punkten auf der Fahrbahn vor dem Fahrzeug gemessen und die zeitliche Veränderung dieses Abstands erfaßt wird. Die Überwachungseinrichtung kann dabei aus ein (2c) oder mehreren Sensoren 2a,2b bestehen. Derartige Sensoren erzeugen bspw. ein dreidimensionales Bild, in dem neben der an sich zweidimensionalen Bildinformation auch noch Entfemungswerte der jeweiligen Bildpunkte erfaßt werden.

Die Punkte auf der Fahrbahn liegen einen vorgegebenen Winkel ϕ zwischen Fahrtrichtung F und Fahrbahn 5. Für jeden Punkt ist ein Soll-Abstand vorgegeben, der in t1 7a(t1) und 7b(t1) sowie einem Neigungswinkel α von Null Grad entspricht. Vorzugsweise liegen alle Punkte auf dem gleichen Abstand. Wird nur ein Sensor 2c verwendet, bilden die Punkte beim Neigungswinkel Null Grad die gestrichelt gezeichnete Kreislinie 7c. Je mehr Punkte erfaßt werden, desto genauer können Abweichungen in der Abstandsmessung, die aus Fahrbahnunebenheiten resultieren, von einer tatsächlichen Neigung des Fahrzeugs unterschieden werden.

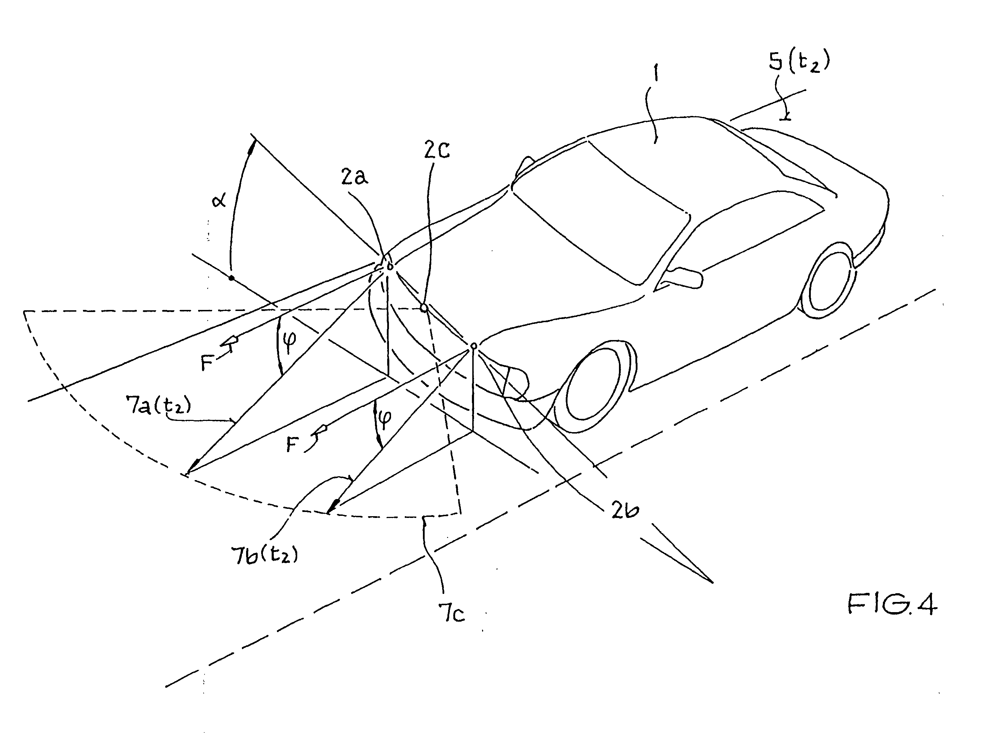

Neigt sich das Fahrzeug mit einem Neigungswinkel α gegenüber der Fahrbahn, wie in Fig. 4 gezeigt, so kommt es zu einer Abweichung des gemessenen IST-Abstands 7a(t2),7b(t2) vom Soll-Abstand.

Aus der zeitlichen Veränderung (t1-t2) der Lage, in diesem Fall konkreter des Abstands 7a/b(t1) zu 7a/b(t2) der Umgebungspunkte wird der Neigungswinkel (α des Fahrzeuges gegenüber einer ebenen Fahrbahn abgeleitet.

## Patentansprüche

1. Verfahren zur Überschlagserkennung und Auslösung insassenschützender Mittel in Fahrzeugen,
a) bei dem ein Signal des Neigungswinkels von zumindest einem auf eine Drehbeschleunigung durch mechanische Auslenkung beweglicher Massekörper reagierenden Drehratensensor erfasst wird,
b) eine optische Überwachung der Umgebung (3,4,5) des sich bewegenden Fahrzeugs (1) durchgeführt wird, indem eine Anzahl von Punkten dieser Umgebung in horizontaler Richtung oder in einem vorgegebenen Winkel (ϕ) zwischen Fahrtrichtung und Fahrbahn erfasst und aus der zeitlichen Veränderung (I(t1) zu I(t2)) der Lage dieser Umgebungspunkte ein Signal des Neigungswinkels (α) des Fahrzeuges gegenüber einer ebenen Fahrbahn abgeleitet wird, **dadurch gekennzeichnet, daß**
c) das Signal der Neigungswinkels der optischen Überwachung mit dem Signal des Drehratensensors verknüpft wird und nur bei Übereinstimmung die insassenschützenden Mittel ausgelöst werden.

2. Verfahren nach Anspruch 1, **dadurch gekennzeichnet, daß** die zeitliche Veränderung der Lage des natürlichen Horizonts (4) erfaßt wird.

3. Verfahren nach Anspruch 1 oder 2, **dadurch gekennzeichnet, daß** die Umgebungsüberwachung mehrere beabstandete Bildpunkte mit einander gleicher Veränderung der Lage erfaßt und daraus die auf der Linearbewegung des Fahrzeuges beruhenden Änderungen eliminiert.

4. Verfahren nach Anspruch 1, **dadurch gekennzeichnet, daß** der Abstand (7a,7b,7c) zwischen der Überwachungseinrichtung (2a,2b,2c) und mehreren Punkten auf der Fahrbahn (5) vor dem Fahrzeug (1) gemessen und die zeitliche Veränderung dieses Abstands (7a,b,c(t1) zu 7a,b,c(t2)) erfaßt wird.

5. Verfahren nach Anspruch 4, **dadurch gekennzeichnet, daß** die Punkte auf der Fahrbahn einen vorgegebenen Winkel (ϕ) zwischen Fahrtrichtung (F) und Fahrbahn (5) aufweisen, für jeden Punkt ein Soll-Abstand vorgegeben ist, der einem Neigungswinkel von Null Grad entspricht, und aus einer Abweichung des gemessenen IST-Abstands vom Soll-Abstand der Neigungswinkel ermittelt wird.

6. Verfahren nach einem der vorangehenden Ansprüche, **dadurch gekennzeichnet, daß** die Umgebungsüberwachung einen Erfassungswinkel aufweist, der um die senkrecht zur Fahrbahn stehende Fahrzeugachse verdrehbar ist.

7. Verfahren nach einem der vorangehenden Ansprüche, **dadurch gekennzeichnet, daß** eine optische Kamera verwendet wird, die zugleich zur Hindemiserkennung und/oder Abstandsregelung dient.

## Claims

1. A method for recognising an overturn and for activating passenger-protecting devices in vehicles,
a) wherein a signal representing the angle of inclination is recorded by at least one rotary speed sensor which reacts to a rotary speed acceleration caused by the mechanical deviation of movable mass bodies;
b) wherein an optical surveillance of the surroundings (3, 4, 5) of the moving vehicle (1) is carried out by recording a plurality of points of said surroundings in the horizontal direction or at a pre-determined angle (ϕ) between the direction of travel and the roadway and deriving a signal representing the angle of inclination (α) of the vehicle in respect of a level roadway from the change in time (I(t1) to I(t2) of the position of these points of the surroundings, **characterised in that**
c) the signal representing the angle of inclination from the optical surveillance is linked with the signal from the rotary speed sensor and that the passenger-protecting devices are triggered off only when both signals are in conformity with each other.

2. A method according to claim 1, **characterised in that** the change in time of the position of the visible horizon (4) is recorded.

3. A method according to claim 1 or 2, **characterised in that** the device for the surveillance of the surroundings records several image points that are spaced from each other and undergo an equal change of position, eliminating therefrom the changes that are due to the linear movement of the vehicle.

4. A method according to claim 1, **characterised in that** the distance (7a, 7b, 7c) between the surveillance device (2a, 2b, 2c) and several points on the roadway (5) in front of the vehicle (1) is measured and that the change in time of said distance (7a, b, c(t1) to 7a, b, c(t2) is recorded.

5. A method according to claim 4, **characterised in that** the points on the roadway have a pre-determined angle (ϕ) between the direction of travel (F) and the roadway (5), that a nominal distance is pre-determined for each point which corresponds to an angle of inclination of zero degrees and that the angle of inclination is determined from a deviation of the measured ACTUAL distance from the nominal distance.

6. A method according to any one of the preceding claims, **characterised in that** the device for the surveillance of the surroundings has a recording angle which can be rotated around the vehicle axis which is in a position vertical to the roadway.

7. A method according to any one of the preceding claims, **characterised in that** an optical camera is used which serves at the same time for recognising obstacles and/or for regulating the distance.

## Revendications

1. Procédé de détection de renversement et de déclenchement de moyens de protection des occupants dans des véhicules automobiles,
a) dans lequel un signal de l'angle d'inclinaison est saisi par au moins un capteur de vitesse de rotation réagissant, par une déviation mécanique de masses mobiles, à une accélération angulaire,
b) une surveillance optique de l'environnement (3,4,5) du véhicule automobile (1) en déplacement est effectuée, un certain nombre de points de cet environnement étant saisis dans la direction horizontale ou sous un angle (ϕ) prédéfini entre le sens de déplacement et la chaussée, et un signal de l'angle d'inclinaison (α) du véhicule automobile par rapport à une chaussée plane étant dérivé à partir de variation temporelle (I(t1) à I(t2)) de la position de ces points de l'environnement, **caractérisé en ce que**
c) le signal de l'angle d'inclinaison de la surveillance optique est relié au signal du capteur de vitesse de rotation et les moyens de protection des occupants ne sont déclenchés qu'en cas de coïncidence.

2. Procédé selon la revendication 1, **caractérisé en ce que** la variation temporelle de la position de l'horizon naturel (4) est saisie.

3. Procédé selon la revendication 1 ou 2, **caractérisé en ce que** la surveillance de l'environnement saisit plusieurs points d'image distants avec une variation identique de la position et en élimine les variations dues au mouvement linéaire du véhicule automobile.

4. Procédé selon la revendication 1, **caractérisé en ce que** l'intervalle (7a,7b,7c) entre l'équipement de surveillance (2a,2b,2c) et plusieurs points sur la chaussée (5) devant le véhicule automobile (1) est mesuré et la variation temporelle de cet intervalle (7a,b,c(t1) relativement à 7a,b,c(t2)) est saisie.

5. Procédé selon la revendication 4, **caractérisé en ce que** les points sur la chaussée présentent un angle prédéfini (ϕ) entre le sens de déplacement (F) et la chaussée (5), **en ce que**, pour chaque point, il est défini intervalle de consigne qui correspond à un angle d'inclinaison de zéro degré, et **en ce que** l'angle d'inclinaison est déterminé à partir d'une variation de l'intervalle EFFECTIF mesuré par rapport à l'intervalle de consigne.

6. Procédé selon une des revendications précédentes, **caractérisé en ce que** la surveillance de l'environnement présente un angle de saisie qui peut tourner autour de l'axe de véhicule automobile perpendiculaire à la chaussée.

7. Procédé selon une des revendications précédentes, **caractérisé en ce qu'**il est utilisé une caméra optique qui sert à la fois à détection d'obstacles et/ou à la régulation d'intervalle.
